# EUROPEAN PATENT APPLICATION

(11) **EP 3 668 038 A1**
(43) Date of publication of application: **17.06.2020**
(21) Application number: 18306691.9
(22) Date of filing: 13.12.2018
(51) Int. Cl.: H04L 29/06, H04W 12/06, H04L 9/32

(54) **METHOD FOR AUTHENTICATING A SYSTEM**

(71) Applicant: Thales Dis France SA, 92190 Meudon (FR)
(72) Inventor: GOUGET, Aline, 13881 GEMENOS CEDEX (FR); PROUST, Philippe, 13881 GEMENOS CEDEX (FR)
(74) Representative: Grevin, Emmanuel

(57) **Abstract**

The invention is a method for authenticating a system (80) including a first component (11) able to establish a communication channel with a server (90) and a second component (12). The first component receives a first challenge (C1) from the server (90) through the communication channel, computes, from the first challenge, a first cryptographic result (R11) reflecting its genuineness, identifies a second challenge (C12) from said first challenge or from said first cryptographic result (R11) and provides said second component with the second challenge. The second component computes, from the second challenge, a second cryptographic result (R12) reflecting its genuineness. The first component collects said first and second cryptographic results and generates a final result (R1) from the cryptographic results it collected. The server receives the final result through the communication channel and authenticates the system by checking the final result using the first challenge.

## Description

### (Field of the invention)

The present invention relates to methods for authenticating systems. It relates particularly to methods of authenticating systems including a plurality of components.

### (Background of the invention)

In highly distributed systems, the variety of software and hardware components makes system authentication very complex. For instance an IoT (Internet of Things) system may comprise a large number of elements at the edge like a plurality of endpoints or may be a device including several components. A cloud service provider may require the IoT devices to get authenticated prior to access the services hosted in its IoT cloud platform.

There is a need to provide an enhanced solution allowing a distant server to authenticate sensitive components of a system.

### (Summary of the Invention)

The invention aims at solving the above mentioned technical problem.

An object of the present invention is a method for authenticating a system including first and second components. The first component is configured to establish a communication channel with a server. The first component receives a first challenge from the server through the communication channel. The first component computes, from the first challenge, a first cryptographic result reflecting the genuineness of the first component. The first component identifies a second challenge from either said first challenge or from said first cryptographic result and provides said second component with the second challenge. The second component computes, from the second challenge, a second cryptographic result reflecting the genuineness of the second component. The first component collects said first and second cryptographic results and generates a final result from the cryptographic results it collected. The server receives from the first component the final result through the communication channel and authenticates the system by checking the final result using the first challenge.

Advantageously, the system may include third and fourth components. The first component may identify a third and a fourth challenges from said first challenge or from at least one of said cryptographic results. The first component may provide said third and fourth components with the third challenge, respectively the fourth challenge. Each of said third and fourth components may compute, from the challenge it got, an additional cryptographic result reflecting its genuineness. The first component may collect the additional cryptographic results and use the additional cryptographic results to generate the final result.

Advantageously, the system may include third and fourth components. The first component may identify a third challenge from said first challenge or from at least one of said cryptographic results and provide said third component with the third challenge. The third component may compute, from the third challenge, a third cryptographic result reflecting the genuineness of the third component. The third component may identify a fourth challenge from said third challenge or from said third cryptographic result and provide said fourth component with the fourth challenge. The fourth component may compute, from the fourth challenge, a fourth cryptographic result reflecting the genuineness of the fourth component. The first component may collect the third and fourth cryptographic results and use the third and fourth cryptographic results to generate the final result.

Advantageously, the final result may be generated using a multi-party computation scheme and a secret sharing scheme.

If one of the components of the system is corrupted, advantageously, the server may identify the corrupted component from the final result.

Advantageously, each of said first and second components may compute its own cryptographic result using a secret data previously generated either by an external entity connected to the server or by a one of said components.

Advantageously, said secret data may have been previously generated from a private key which has been deleted after the generation.

Advantageously, said second challenge may be computed by applying a preset mathematical function to the first challenge.

Advantageously, the final result may be generated by the first component.

Another object of the invention is a system including a processor, a first component able to establish a communication channel with a server and a second component. The first component is configured to receive through the communication channel a first challenge from the server. The first component is configured to compute, from the first challenge, a first cryptographic result reflecting its own genuineness. The first component is configured to identify a second challenge from said first challenge or from said first cryptographic result and to provide said second component with the second challenge. The second component is configured to compute, from the second challenge, a second cryptographic result reflecting its own genuineness. The first component is configured to collect the first and second cryptographic results, to generate a final result from the collected cryptographic results and to send the final result to the server through the communication channel. The final result allows the server to authenticate the system by checking the final result using the first challenge.

Advantageously, the system may include third and fourth components. The first component may be configured to identify a third and a fourth challenges from said first challenge or from at least one of said cryptographic results and to provide each of said third and fourth components with the third challenge, respectively the fourth challenge. Each of said third and fourth components may be configured to compute, from the challenge it got, an additional cryptographic result reflecting its genuineness. The first component may be configured to collect the additional cryptographic results and to use the additional cryptographic results to generate the final result.

Advantageously, the system may include third and fourth components. The first component may be configured to identify a third challenge from said first challenge or from said second cryptographic result and to provide said third component with the third challenge. The third component may be configured to compute, from the third challenge, a third cryptographic result reflecting its genuineness. The third component may be configured to identify a fourth challenge from said third challenge or from said third cryptographic result and to provide said fourth component with the fourth challenge. The fourth component may be configured to compute, from the challenge it got, a fourth cryptographic result reflecting its genuineness. The first component may be configured to collect the third and fourth cryptographic results and to use the additional cryptographic results to generate the final result.

Advantageously, said first and second components may belong to an endpoint which is a gateway.

Advantageously, the first and second challenges may have a same value.

Advantageously, each of said first and second components may compute its own cryptographic result using a secret data previously generated by a one of said components.

### (Brief description of the drawings)

Other characteristics and advantages of the present invention will emerge more clearly from a reading of the following description of a number of preferred embodiments of the invention with reference to the corresponding accompanying drawings in which:
- Figure 1 shows first example of architecture of a system according to the invention;
- Figure 2 depicts a first example of architecture of a component according to the invention;
- Figure 3 depicts a second example of architecture of a component according to the invention;
- Figure 4 shows a second example of architecture of a system according to the invention; and
- Figure 5 depicts an example of a flow chart for authenticating the system according to the invention.

### (Detailed description of the preferred embodiments)

The invention may apply to any type of system comprising several components and able to interact with another computer machine like a server. Each component may be a hardware unit, a software application running on a processing unit or a combination of software element(s) and hardware element(s). These components may be hardware sensors, processor units, ASIC SoC (System on Chip), FPGA, physical storage units, software services, orchestrators or key management systems for example.

These components may also be mobile applications, smart objects, mono cameras, stereo cameras, radar, Lidar, GPS, wheel sensor, temperature sensor, ultrasonic sensor.

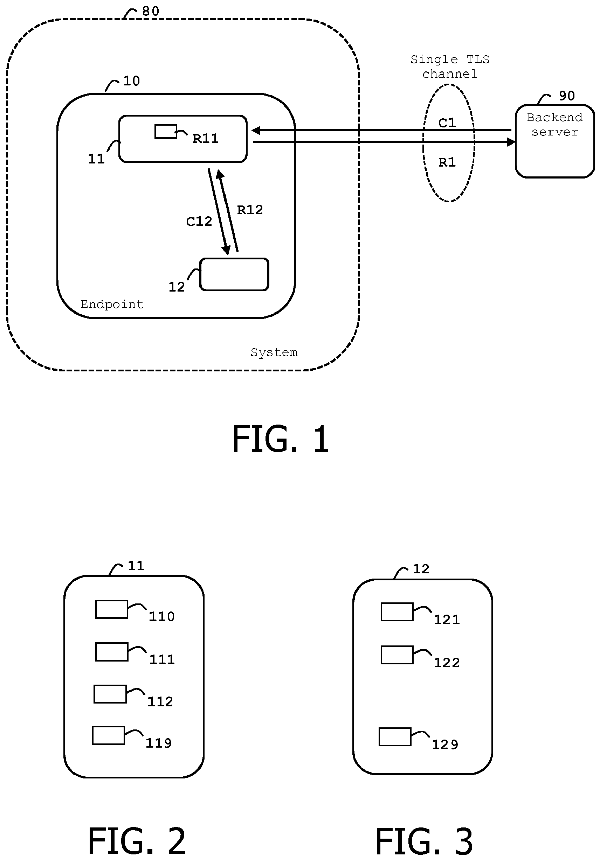

**Figure 1** shows a first example of architecture of a system according to the invention.

In this example, the system 80 includes at least one computer machine (not shown) and comprises an endpoint 10 including two components 11 and 12. The endpoint 10 may be a physical electronic device.

For instance the first component 11 may be a baseband processor and the second component 12 may be a microcontroller unit (MCU).

The first component 11 is able to establish a communication channel with a server 90 separate from the system 80. The communication channel can be established via a LAN (Local Area Network) or a WAN (Wide Area Network). For instance, the server may be reachable through a TLS (Transport Layer Security) channel established via the Internet. The first component 11 is adapted to receive through the communication channel a challenge C1 sent by the server 90.

The first component 11 is adapted to identify a second challenge C12 from the received challenge C1 and to provide the second component 12 with the challenge C12.

In one embodiment, the first component 11 is adapted to compute the second challenge C12 by applying a preset mathematical function to the challenge C1. For instance the mathematical function can use a secret key to perform the transformation from the first challenge C1 to second challenge C12. In another example, the second challenge C12 may be generated by applying the XOR (eXclusive OR) function with a predefined input parameter. In another example, the second challenge C12 may be generated by extracting the last 2 bytes of the initial challenge C1.

In one embodiment, the first component 11 can delegate the computation of the second challenge C12 to another component (not shown at Figure 1) belonging to the endpoint 10.

In one embodiment, the value of the second challenge C12 is set with the value of the first challenge C1.

Both the first and second components 11 and 12 are adapted to compute, from the challenge they got, their own cryptographic result reflecting their own genuineness. In other words, the cryptographic result R12 computed by the second component 12 is assumed to be generated with a right value only if the component 12 is not compromised.

In one embodiment, the first and second components 11 and 12 are adapted to compute their own cryptographic result by using their own preset cryptographic algorithm and their own pre-stored secret key. Preferably, each cryptographic result can be computed as a signature or as a partial signature.

The first component 11 is adapted to collect the cryptographic results computed by the components 11 and 12 and to generate a final result R1. In one embodiment, the final result R1 may be built by concatenating the cryptographic result R11 provided by the component 11 and the cryptographic result R12. In another embodiment, the final result R1 is built by combining the cryptographic results R11 and R12 using a mathematical operation * (i.e. multiply function) such as R1 = R11*R12; optionally, hash values of R11 and R12 could be added to the final result such as R1 = (R11*R12; hash(R11); hash(R12)).

In another embodiment, the final result R1 may be computed directly from R12 or it may even be equal to R12; in these cases the challenge C12 is derived from R11. In all embodiments, hash values of R11 and R12 (or cryptographic proof-of-knowledge on R11 or R12 showing that R11 or R12 have been well-formed and correctly computed), could be added to the final result R1.

The first component 11 is adapted to send the final result R1 to the server 90 through the communication channel. The final result allows the server 90 to authenticate the system 80 by checking the final result R1 using the first challenge C1. For instance the server 90 may perform a cryptographic computation using both the final result R1 and the initial challenge C1. Then the server can make a decision whether the system 80 is authenticated or not (i.e. whether the sensitive components of the systems are genuine or not).

In one embodiment the components of the system 80 and the server 90 may be adapted to apply a specific cryptographic scheme allowing the server 90 to identify, from the final result R1, an individual wrong cryptographic result. Thus the server 90 may able to detect what component has been compromised and to apply a relevant action in response.

For instance, the final result R1 may be generated as the concatenation of the cryptographic results R11 and R12. In another embodiment, the final result R1 may be generated based on a scheme using a proof of knowledge with a specific crypto algorithm.

An example of architecture of the first component 11 is presented at **Figure 2****.** The component 11 includes a dispatcher agent 110 designed to get the initial challenge C1 and to identify the challenge C12 from the challenge C1. The dispatcher agent 110 is also designed to forward the challenge C12 to the second component 12. Advantageously, the dispatcher agent 110 is adapted to generate and distribute a set of challenges for a large number of components. Preferably the dispatcher agent 110 is a software agent.

The component 11 includes a secret data 112 (e.g. a secret key) and a generator agent 111 designed to compute a cryptographic result from the challenge C1 and the secret data 112 by applying a predefined cryptographic algorithm.

The component 11 includes a communication interface 119 allowing to exchange data with other components of the endpoint 10 and with the server 90.

An example of architecture of the second component 12 is presented at **Figure 3****.** The component 12 includes a communication interface 129 allowing to exchange data with the component 11. The component 12 includes a secret data 122 (e.g. a secret key) and a generator agent 121 designed to compute a cryptographic result by applying a preset cryptographic algorithm to the secret data 122 and a challenge received through the communication interface 129. The generator agent 121 is configured to send the computed cryptographic result to the component 11 through the communication interface 129. Many cryptographic algorithms can be used such as a partial RSA exponentiation for RSA signature or a partial ECDSA signature based on addition and multiplication on an elliptic curve as described for example in the paper "Fast secure two-party ECDSA signing" by Yehuda Lindell, Crypto 2017.

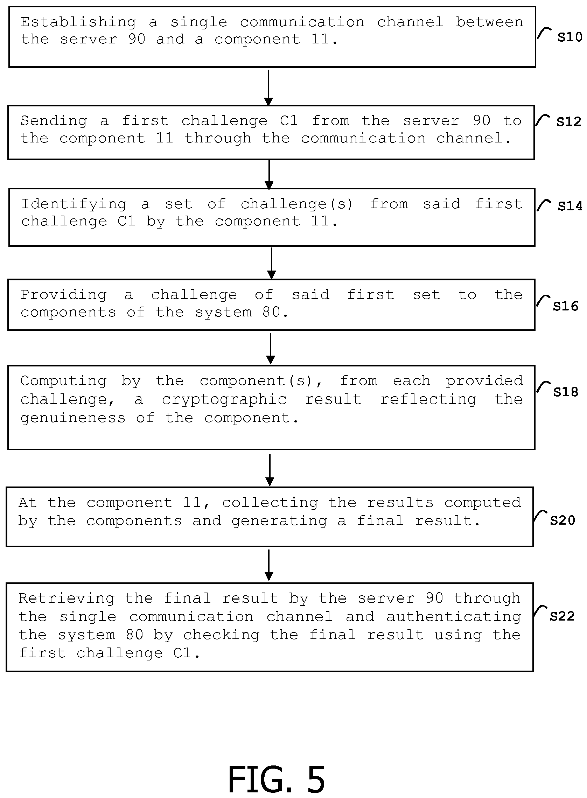

**Figure 5** shows an example of a flow chart for authenticating a system comprising several components according to the invention.

At step S10, a single communication channel is established between the server 90 and the component 11 of the system 80 (similar to the system described at Figure 1). Preferably, the communication channel is secured by a conventional security mechanism.

At step S12, the server 90 sends an initial challenge C1 to the component 11 through the communication channel.

At step S14, the component 11 identifies a set of challenge(s) from the received challenge C1.

At step S16, each component belonging to the endpoint 10 is provided with a challenge belonging to the set. Thus each component belonging to the endpoint 10 can receive a same challenge (i.e. common value). In another embodiment, the challenge(s) sent by the component 11 can be derived from the cryptographic result computed by the component 11. More generally, a challenge that is sent to a component may depend on what was produced by the previous component.

At step S18, each component computes, from the challenge it received, a cryptographic result reflecting its own genuineness.

At step S20, the component 11 collects the cryptographic results computed by the components and generates a final result R1 from these cryptographic results.

At step S22, the component 11 sends the final result R1 to the server 90 through the single communication channel. Then the server 90 authenticates the final result using the first challenge C1 and make a decision whether the system 80 is authenticated or not.

It is to be noted that from the point of view of the server 90, only one communication channel is open with the system 80. In addition, the server has only one challenge to manage and only one result to check for authenticating the whole system 80. The data flow at authentication time is light and simple to operate.

The invention can be implemented with processing units having limited power in each components of the system. Thus the invention is well-suited for IoT systems.

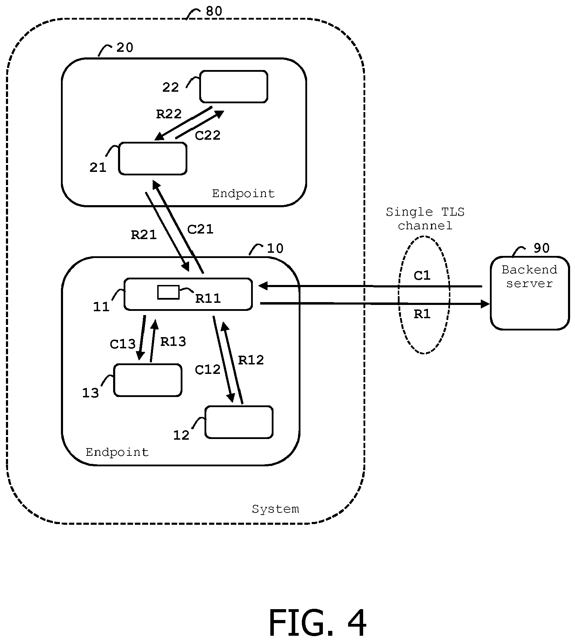

**Figure 4** shows a second example of architecture of a system according to the invention.

In this example, the system 80 comprises two endpoints 10 and 20. The system 80 includes at least one computer machine (not shown). The endpoint 10 includes three components 11, 12 and 13.

For instance the first component 11 may be a Telecom service, the second component 12 may be a payment service and the third component 13 may be an identity service.

The endpoint 20 includes two components 21 and 22.

For instance the component 21 may be a biometric reader while the component 22 may be display.

The component 11 is able to establish a communication channel with a remote backend server 90. For instance, the backend server may be reachable through an Over-The-Air Telecom channel. The component 11 is adapted to receive through the communication channel an initial challenge C1 sent by the server 90.

The component 11 is adapted to identify a set of challenges (C12, C13 and C21) from the received challenge C1 and to forward a challenge to each other components belonging to the endpoint 10 and to at least one component belonging to the endpoint 20.

It is to be noted that the set of challenges can be computed directly from the initial challenge C1 (by applying a preset mathematical function) or indirectly from the initial challenge C1 by using an intermediate computation. For instance, the component 11 can compute its own cryptographic result R11 then generate the challenges of the set from the cryptographic result R11. In another embodiment, a chain of components can be defined and each challenge may be computed by the previous component.

For instance, the component 11 can send the challenge C12 to the component 12, the challenge C13 to the component 13 and the challenge C21 to the component 21.

The component 11 can generate the set of challenges by using any relevant mathematical function applied to the initial challenge C1.

In one embodiment, the component 21 is adapted to identify a group of challenge(s) from the challenge C21 it received and to forward a challenge to each other components belonging to the endpoint 20. (In a way similar to the way the component 11 operates.) For instance the component 21 can compute a challenge C22 from the challenge C21 and send the challenge C22 to the component 22. Alternatively, the component 21 can compute its own cryptographic result R21 from the challenge C21 and generate a new challenge C22 from the cryptographic result R21.

In another embodiment, the component 11 is adapted to forward a challenge to each components belonging to the endpoint 20. The sending can be directly performed to each target components or performed through the component 21.

All components 11, 12, 13, 21 and 22 are adapted to compute, from the challenge they got, their own cryptographic result reflecting their own genuineness. For instance, the cryptographic result R22 computed by the component 22 is assumed to be generated with a right value only if the component 22 is not compromised.

The component 11 is adapted to collect the cryptographic results computed by the all the components of the system 80.

In one embodiment, the component 11 can be configured to directly retrieve each cryptographic result.

In one embodiment, the component 21 may be adapted to gather the cryptographic results of all component(s) of the endpoint 20 and to forward them to the component 11.

In one embodiment, the component 21 may be adapted to collect the cryptographic results of all component of the endpoint 20, to consolidate them in a common result and to forward the common result to the component 11. Alternatively, in the case of a chain of challenge, the component 21 may be adapted to collect the cryptographic result of the last component (of the chain) of the endpoint 20 and to forward the last cryptographic result (acting as a common result) to the component 11.

In one embodiment, the component 11 is adapted to generate a final result R1 from all the collected cryptographic results (R11, R12, R13, R21 and R22).

The component 11 is adapted to send the final result R1 to the server 90 through the communication channel. The final result allows the server 90 to authenticate the whole system 80 by checking the final result R1 using the first challenge C1. The result R1 can be considered as single signature reflecting the genuineness of all sensitive components of the system 80.

In one embodiment, the final result R1 can be generated using a multi-party computation scheme and a secret sharing scheme. In this case, the previous steps follow the same rules, or are compatible with the step of generation of the final result.

In one embodiment, each component computes its own cryptographic result using a secret data (like a key or a secret share) previously generated either by an external entity connected to the server or by a one of the system's components. The secret data may be a secret function configured with a secret key and secret parameters.

In one embodiment, the secret data may have been previously generated from a private key which has been deleted after the generation. For instance, a set of secret shares can be generated from a private key and distributed to the sensitive components (i.e. components that must be authenticated) of the system 80.

According to the invention, the flow for provisioning the secret data is easy to deploy.

In one embodiment the provisioning of the secret data can be done during the manufacturing phase of the devices intended to be part of the system.

In one embodiment the provisioning of the secret data can be done during the installation of the endpoint 10 or at the first start of the endpoint 10.

In one embodiment, the provisioning of the secret data can be done at the first connection time to the server 90.

It must be understood, within the scope of the invention, that the above-described embodiments are provided as non-limitative examples. In particular, the features described in the presented embodiments and examples may be combined.

The invention is well-suited for IoT systems. It allows to detect and prevent attacks occurring in highly distributed systems comprising a huge number of components or sub-components.

The invention allows to take an appropriate security action when a system needs to access a server during the execution of a transaction.

The invention allows to secure a system comprising a huge number of components implemented using a large number of technologies, protocols, types of hardware device and programming languages.

The architectures of the systems shown at Figure 1 and 4 are provided as example only. These architectures may be different. For example, the endpoint 10 may be implemented as a gateway able to communicate with all other endpoints of the system. By reference to Figure 1, the component 12 may comprises several sub-components and may be adapted to generate and forward challenges to its sub-components and to collect (and consolidate) cryptographic results generated by these sub-components.

## Claims

1. A method for authenticating a system (80) including a first component (11) able to establish a communication channel with a server (90) and a second component (12), **characterized in that**:
- the first component receives a first challenge (C1) from the server (90) through the communication channel,
- said first component computes, from the first challenge, a first cryptographic result (R11) reflecting its genuineness,
- the first component identifies a second challenge (C12) from said first challenge or from said first cryptographic result (R11) and provides said second component with the second challenge,
- said second component computes, from the second challenge, a second cryptographic result (R12) reflecting its genuineness,
- the first component collects said first and second cryptographic results, and generates a final result (R1) from the cryptographic results it collected,
- the server receives from the first component the final result through the communication channel and authenticates the system by checking the final result using the first challenge.

2. The method according to claim 1, wherein the system includes third and fourth components (21,22), wherein the first component identifies a third and a fourth challenges (C21, C22) from said first challenge or from at least one of said cryptographic results (R11,R12 or R13), wherein the first component provides said third and fourth components with the third challenge, respectively the fourth challenge, wherein each of said third and fourth components computes, from the challenge it got, an additional cryptographic result reflecting its genuineness and wherein the first component collects the additional cryptographic results and uses the additional cryptographic results to generate the final result.

3. The method according to claim 1, wherein the system includes third and fourth components (21,22), wherein the first component identifies a third challenge (C21) from said first challenge or from at least one of said cryptographic results (R12) and provides said third component with the third challenge, wherein the third component computes, from the third challenge, a third cryptographic result reflecting its genuineness, wherein the third component identifies a fourth challenge (C22) from said third challenge or from said third cryptographic result and provides said fourth component with the fourth challenge, wherein the fourth component computes, from the fourth challenge, a fourth cryptographic result reflecting its genuineness and wherein the first component collects the third and fourth cryptographic results and uses the third and fourth cryptographic results to generate the final result.

4. The method according to claim 1 or 3, wherein the final result is generated using a multi-party computation scheme and a secret sharing scheme.

5. The method according to claim 1 or 3, wherein one of the components of the system is corrupted and wherein the server identifies the corrupted component from the final result.

6. The method according to claim 1, wherein each of said first and second components computes its own cryptographic result using a secret data previously generated either by an external entity connected to the server or by a one of said components.

7. The method according to claim 6, wherein said secret data has been previously generated from a private key which has been deleted after the generation.

8. The method according to claim 1, wherein said second challenge is computed by applying a preset mathematical function to the first challenge.

9. The method according to claim 1, wherein the final result is generated by the first component.

10. A system (80) including a processor, a first component (11) able to establish a communication channel with a server (90) and a second component (12), **characterized in that**:
- the first component is configured to receive through the communication channel a first challenge (C1) from the server (90),
- - said first component is configured to compute, from the first challenge, a first cryptographic result (R11) reflecting its own genuineness,
- the first component is configured to identify a second challenge (C12) from said first challenge or from said first cryptographic result (R11) and to provide said second component with the second challenge,
- said second component is configured to compute, from the second challenge, a second cryptographic result (R12) reflecting its own genuineness,
- the first component is configured to collect the first and second cryptographic results, to generate a final result (R1) from the collected cryptographic results and to send the final result to the server through the communication channel, said final result allowing the server to authenticate the system by checking the final result using the first challenge.

11. The system according to claim 10 wherein the system includes third and fourth components (21,22), wherein the first component is configured to identifies a third and a fourth challenges (C21, C22) from said first challenge or from at least one of said cryptographic results (R12, R11) and to provide each of said third and fourth components with the third challenge, respectively the fourth challenge, wherein each of said third and fourth components is configured to compute, from the challenge it got, an additional cryptographic result reflecting its genuineness and wherein the first component is configured to collect the additional cryptographic results and to use the additional cryptographic results to generate the final result.

12. The system according to claim 10, wherein the system includes third and fourth components (21,22), wherein the first component is configured to identifies a third challenge (C21) from said first challenge or from said second cryptographic result (R12) and to provide said third component with the third challenge, wherein the third component is configured to compute, from the third challenge, a third cryptographic result (R13) reflecting its genuineness, wherein the third component is configured to identify a fourth challenge (C22) from said third challenge or from said third cryptographic result (R13) and to provide said fourth component with the fourth challenge, wherein said fourth component is configured to compute, from the challenge it got, a fourth cryptographic result reflecting its genuineness and wherein the first component is configured to collect the third and fourth cryptographic results and to use the additional cryptographic results to generate the final result.

13. The system according to claim 10, wherein said first and second components belongs to an endpoint which is a gateway.

14. The system according to claim 10, wherein the first and second challenges have a same value.

15. The system according to claim 10, wherein each of said first and second components computes its own cryptographic result using a secret data previously generated by a one of said components.
